(19) **Europäisches Patentamt / European Patent Office / Office européen des brevets**

(11) **EP 1 748 278 B1**

(12) **EUROPÄISCHE PATENTSCHRIFT**

(45) Veröffentlichungstag und Bekanntmachung des Hinweises auf die Patenterteilung:
**28.05.2008  Patentblatt 2008/22**

(51) Int Cl.:
*G01B 21/04* *(2006.01)*

(21) Anmeldenummer: **05016535.6**

(22) Anmeldetag: **29.07.2005**

(54) **Verfahren zur Korrektur der thermischen Ausdehnung eines Werkstückes sowie Koordinatenmessgerät zur Durchführung des Verfahrens**

Method for compensating heat expansion of a workpiece and coordinate measuring machine for performing this method

Procédé de compensation de la dilatation thermique d'un objet et appareil de mesure de coordonnées mettant en oeuvre ce procédé

(84) Benannte Vertragsstaaten:
**DE IT**

(43) Veröffentlichungstag der Anmeldung:
**31.01.2007  Patentblatt 2007/05**

(73) Patentinhaber: **Hexagon Metrology GmbH**
**35578 Wetzlar (DE)**

(72) Erfinder:
• **Mantel, Matthias**
**Richmond TW10 6NE (GB)**

• **Neumann, Jan Dr.**
**35625 Hüttenberg (DE)**
• **Weber, Hartwig Dr.**
**35398 Giessen (DE)**

(74) Vertreter: **Knefel, Cordula**
**Patentanwälte Knefel & Knefel**
**Postfach 19 24**
**35529 Wetzlar (DE)**

(56) Entgegenhaltungen:
EP-A- 0 416 391   EP-A- 1 128 156
WO-A-00/34974   DE-A1- 10 138 138

**Beschreibung**

Die Erfindung betrifft ein Verfahren zur Korrektur der thermischen Ausdehnung eines Werkstückes sowie ein Koordinatenmessgerät zur Durchführung des Verfahrens.

Werkstücke, deren thermischer Ausdehnungskoeffizient von null verschieden ist, können unter Umgebungsbedingungen, die von 20 °C abweichen, nur dann dimensioniell vermessen werden, wenn ihre Temperatur und ihr thermischer Ausdehnungskoeffizient während der Messung bekannt sind.

Nach dem Stand der Technik sind Koordinatenmessgeräte, insbesondere wenn sie zum Einsatz in der Fertigung geeignet sind, mit mindestens einem Temperaturfühler ausgestattet, der während der Messung oder kurz davor oder kurz danach mit dem Werkstück in Kontakt gebracht wird, um dessen Temperatur zu messen.

Dagegen sind die Ausdehnungskoeffizienten, insbesondere wenn es sich um spezielle Metalllegierungen handelt, häufig nicht genau bekannt, so dass Werte aus Standardtabellenwerken verwendet werden, die vom tatsächlichen Ausdehnungskoeffizienten durchaus 15 % oder mehr abweichen können. Bei Werkstücken, die aus Werkstoffen mit unterschiedlichen Ausdehnungskoeffizienten zusammengesetzt sind, ist es selbst bei genauer Kenntnis des Ausdehnungsverhaltens dieser Einzelwerkstoffe nahezu unmöglich, das Ausdehnungsverhalten des gesamten Werkstückes vorherzusagen.

Im Interesse einer möglichst genauen dimensionellen Messung auf einem Koordinatenmessgerät in der Fertigung muss der Ausdehnungskoeffizient jedoch genau bekannt sein.

Zum Stand der Technik (EP 0 660 073 A1) gehört ein Verfahren, bei dem zwei Referenzkörper zusätzlich zum Werkstück mitgemessen werden, von denen einer aus dem Material des Werkstückes besteht und der andere aus einem Material mit vernachlässigbaren thermischen Ausdehnungskoeffizienten.

Wenn beide Referenzkörper ungefähr die gleiche Dimension besitzen und die Dimension desjenigen Referenzkörpers, der aus dem gleichen Material wie das Werkstück besteht, bei 20 °C genau bekannt ist, kann durch Messung beider Referenzkörper bei einer Temperatur, die deutlich von 20 °C abweicht, der Ausdehnungskoeffizient des Werkstückmaterials bestimmt werden.

Dieses Verfahren ist durch die Notwendigkeit der Herstellung zweier Referenzkörper außerordentlich aufwändig. Außerdem lassen sich mit diesem Verfahren die Ausdehnungskoeffizienten von Werkstücken, die aus Werkstoffen mit unterschiedlichen Ausdehnungskoeffizienten zusammengesetzt sind, nicht bestimmen, weil hier die geometrischen Abmessungen des Werkstückes eine Rolle spielen

Zum Stand der Technik (WO 00/34974 A1) gehört ein Verfahren zur Temperaturkompensation bei dreidimensionalen Messungen. Gemäß diesem Stand der Technik wird die Umgebungstemperatur einer Arbeitsstation erfasst. Für die Durchführung der Temperaturkompensation wird der Ausdehnungskoeffizient des Werkstückes als quadratische Funktion bestimmt.

Weiterhin gehört zum Stand der Technik (DE 101 38 138 A1) ein Verfahren zur Korrektur des Temperaturfehlers bei einer Messung mit einem Koordinatenmessgerät. Bei diesem Verfahren wird die Temperatur wenigstens eines Teiles eines Koordinatenmessgerätes oder des Werkstücks bestimmt, und es können hieraus geeignete Temperaturkorrekturdaten für das wenigstens eine Teil des Koordinatenmessgerätes aus den gespeicherten Korrekturdaten ermittelt werden. Eine Bestimmung eines Ausdehnungskoeffizienten ist nur für den wenigstens einen Teil des Koordinatenmessgerätes vorgesehen.

Weiterhin gehört zum Stand der Technik (EP 0 416 391 A2) eine Längen- oder Winkelmesseinrichtung. Diese Längen- oder Winkelmesseinrichtung besteht aus einem Material mit einem genau bekannten thermischen Ausdehnungskoeffizienten.

Zum Stand der Technik (EP 1 128 156 A1) gehört weiterhin ein Verfahren und eine Vorrichtung für eine automatische Kompensation von Messfehlern, die thermisch bedingt sind. Bei diesem zum Stand der Technik gehörenden Verfahren ist der Ausdehnungskoeffizient von Werkstück und Messvorrichtung bekannt.

Das der Erfindung zugrunde liegende technische Problem besteht darin, ein Verfahren zur Korrektur der thermischen Ausdehnung eines Werkstückes anzugeben, bei dem der tatsächliche thermische Ausdehnungskoeffizient des Werkstückes nicht bekannt sein muss, und bei dem auf Referenzkörper verzichtet werden kann. Darüber hinaus soll ein Koordinatenmessgerät zur Durchführung des Verfahrens angegeben werden.

Das erfindungsgemäße Verfahren zur Korrektur der thermischen Ausdehnung eines Werkstückes, bei dem mit einem Messgerät zur dimensionellen Messung von Werkstücken Merkmale eines ersten Werkstückes gemessen und Messwerte erfasst werden, weist folgende Verfahrensschritte auf:

- Das Werkstück wird auf dem Koordinatenmessgerät so lange zyklisch gemessen, wobei die Messwerte und eine bei der jeweiligen Messung vorhandene Werkstücktemperatur aufgezeichnet werden, bis die Werkstücktemperatur eine vorbestimmte Spanne durchlaufen hat,

- die Messung zur Bestimmung eines merkmalsbezogenen Ausdehnungskoeffizienten wird mit einem temperaturkompensierten Messgerät durchgeführt,

- die gemessenen Werte von von der Werkstücktemperatur abhängigen Merkmalen werden gegen die zugehörige Werkstücktemperatur aufgetragen,

- der merkmalsbezogene Ausdehnungskoeffizient wird aus der funktionalen Abhängigkeit der Merkmalsänderung von der Werkstücktemperatur bestimmt,

- der ermittelte merkmalsbezogene Ausdehnungskoeffizient wird zur Korrektur des jeweiligen Merkmales bei zukünftigen Messungen eines gleichartigen Werkstückes herangezogen.

Der Einfachheit halber wird im Folgenden das Verfahren für die Anwendung auf einem Koordinatenmessgerät beschrieben. Die Ausführungen gelten jedoch gleichermaßen für sämtliche anderen bekannten Vorrichtungen zum dimensionellen Messen von Werkstücken.

Das erfindungsgemäße Verfahren eignet sich insbesondere für Serienmessungen, wie sie in der Fertigung üblich sind.

Die Temperaturkompensation des Messgerätes kann zum einen dadurch erfolgen, dass eine Temperaturkompensation der Maßstäbe mittels die Temperatur der Maßstäbe erfassende Temperatursensoren bei bekannten Ausdehnungskoeffizienten der Maßstäbe durchgeführt wird.

Es besteht alternativ auch die Möglichkeit, dass Maßstäbe aus einem temperaturunabhängigen Material, wie beispielsweise Glaskeramik verwendet werden.

Gemäß einer weiteren vorteilhaften Ausgestaltung der Erfindung wird bei der Messung der Merkmale der gleichartigen Werkstücke derselbe Tastersatz verwendet wie bei der Messung des ersten Werkstückes.

Das erfindungsgemäße Verfahren wird vorteilhaft mit einem Koordinatenmessgerät durchgeführt, welches einen Tastkopf zum Antasten von Werkstücken aufweist, der räumlich beweglich an einem motorisierten Trägergestell angeordnet ist, und wobei der Tastkopf mindestens ein Antastelement trägt. Das Koordinatenmessgerät weist darüber hinaus eine Steuereinheit auf, die den Tastkopf mit Hilfe des Trägergestelles räumlich verfährt, wobei das Antastelement mit einem Werkstück in Kontakt gebracht wird. Darüber hinaus weist das Koordinatenmessgerät mindestens einen Temperatursensor auf, der die Temperatur des Werkstückes misst. Zusätzlich weist die Steuereinheit Speichereinrichtungen auf, die merkmalsbezogene Antastkoordinaten und zeitlich zugehörige Werkstücktemperaturen speichert und eine Recheneinheit aufweist, die als eine aus den gemessenen Merkmalen und den zugehörigen, mit dem Temperatursensor gemessenen Werkstücktemperaturen merkmalsabhängige Ausdehnungskoeffizienten des Werkstückes berechnende Recheneinheit ausgebildet ist, und wobei die Steuereinheit als eine bei nachfolgender Messung gleichartiger Werkstücke die merkmalsabhängigen Ausdehnungskoeffizienten des Werkstückes heranziehende Steuereinheit ausgebildet ist. Ferner weist das Koordinatenmessgerät temperaturkompensierte Maßstäbe auf, um den thermischen Ausdehnungskoeffizienten des Werkstückes zu bestimmen.

Diese Temperaturkompensation der Maßstäbe kann darin bestehen, dass der Ausdehnungskoeffizient der Maßstäbe bekannt ist und mit Hilfe von Temperatursensoren an den Maßstäben die Temperatur der Maßstäbe gemessen wird, wobei die Längenausdehnung der Maßstäbe rechnerisch berücksichtigt wird.

Es besteht auch die Möglichkeit, Maßstäbe aus einem Material wie zum Beispiel Glaskeramik zu verwenden, die ihrerseits nur einen vernachlässigbaren Ausdehnungskoeffizienten aufweisen.

Generalisiert gilt für alle funktionalen Zusammenhänge der Merkmalsabhängigkeit von der Temperatur: Der Ausdehnungskoeffizient $\alpha(T)$ ist die Ableitung der Merkmalsänderungsfunktion nach der Temperatur. Für eine gemessene Länge L gilt beispielsweise:

$$\alpha(T) = \frac{dL}{dT} \ .$$

Im einfachsten Fall ist die Merkmalsabhängigkeit von der Temperatur eine Gerade. Dann ist der Ausdehnungskoeffizient eine durch die Geradensteigung repräsentierte Konstante, die nicht von der Temperatur abhängig ist. Das erfindungsgemäße Verfahren lässt sich jedoch analog auf alle denkbaren funktionalen Abhängigkeiten anwenden.

Im allgemeinen Fall hat ein gemessenes, von der Temperatur T abhängiges Merkmal M(T), das bei 20 °C die Größe $M_{20}$ besitzt, bei der Temperatur T die Größe

$$M(T) = M_{20} \left( 1 + \int_{20°}^{T} \alpha(t)dt \right) \ .$$

Das erfindungemäße Verfahren weist den weiteren Vorteil auf, dass es selbstkalibrierend ist. Der Ausdehnungskoeffizient wird so bestimmt, dass ein Messmerkmal temperaturunabhängig immer gleich gemessen wird, also auch bei der Bezugstemperatur von 20 °C, bei der die rechnerische Temperaturkompensation des Werkstückes gleich null ist und bei der die Messvorrichtung (hier das Koordinatenmessgerät) über einen Kalibriervorgang an die Längenmesseinheit Meter angeschlossen wird.

Weitere Merkmale und Vorteile der Erfindung ergeben sich anhand der zugehörigen Zeichnung. In der Zeichnung zeigen:

Fig. 1 ein Koordinatenmessgerät in perspektivischer Ansicht;

Fig. 2 eine Darstellung der rechnerischen Bestimmung eines thermischen Ausdehnungskoeffizienten eines Werkstückes.

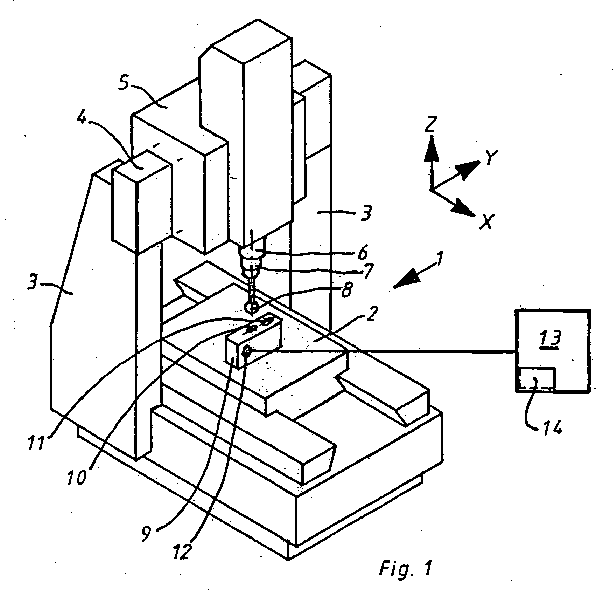

Fig. 1 zeigt ein Koordinatenmessgerät 1 mit einem in X-Richtung verschiebbaren Messtisch 2. Ein Portal 3, welches nicht verschiebbar ausgebildet ist, trägt an einer Traverse 4 einen in Y-Richtung verschiebbaren Schlitten 5, an dem wiederum eine in Z-Richtung verschiebbare Pinole 6 angeordnet ist. An der Pinole 6 ist ein Tastkopf 7 angeordnet, der einen Taster 8 trägt. Auf dem Tisch 2 ist ein Werkstück 9 angeordnet.

Das Werkstück 9 wird auf dem Koordinatenmessgerät 1 so lange zyklisch gemessen, wobei die Messwerte und die Werkstücktemperatur aufgezeichnet werden, bis die Werkstücktemperatur eine vorbestimmte Spanne durchlaufen hat. Es ist beispielsweise möglich, eine Zeitspanne von 24 Stunden vorzusehen, so dass die zyklische Messung bei Tagtemperaturen und Nachttemperaturen durchgeführt wird, wobei der Temperaturgang eines vollen Tages erfasst wird.

Die gemessenen Werte von von der Werkstücktemperatur abhängigen Merkmalen, wie beispielsweise der Durchmesser einer Bohrung 10 oder der Abstand der Bohrungen 10 und 11 in dem Werkstück 9, werden gegen die zugehörige Werkstücktemperatur aufgetragen.

Die Werkstücktemperatur wird mittels eines Temperatursensors 12 ermittelt. Die Temperaturmesswerte werden in eine Steuervorrichtung 13 übertragen. Die Steuervorrichtung 13 weist eine Auswerte- und Recheneinheit 14 auf, die beispielsweise als Computer ausgebildet sein kann.

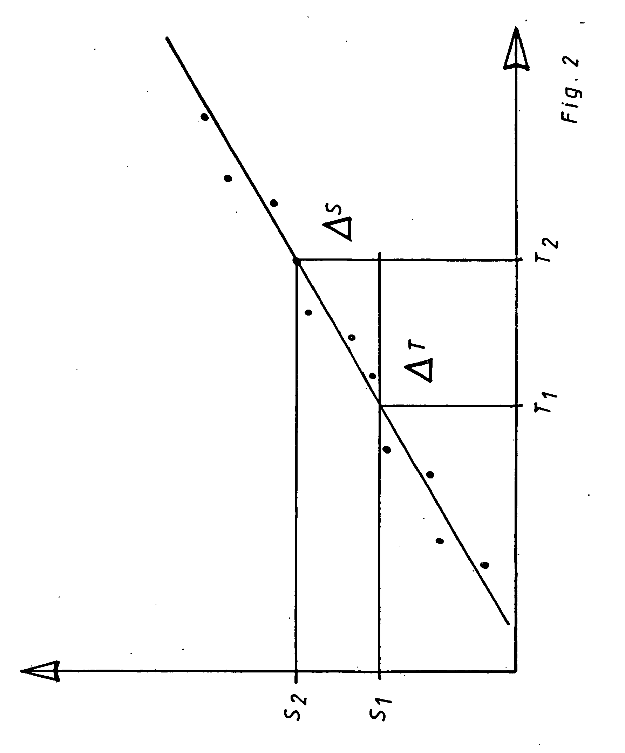

Fig. 2 zeigt ein Diagramm, in dem dimensionelle Messwerte des Messmerkmales (S), beispielsweise der Durchmesser der Bohrung 10 oder der Abstand der Bohrungen 10, 11, gegenüber der Werkstücktemperatur aufgetragen werden. Weist das Koordinatenmessgerät 1 gemäß Fig. 1 temperaturunabhängige Maßstäbe auf, so wird der merkmalsbezogene Ausdehnungskoeffizient $\alpha$ (T) folgendermaßen bestimmt:

$$\alpha(T) = \frac{dS}{dT} = \frac{\Delta S}{\Delta T} \approx \frac{S_2 - S_1}{T_2 - T_1} \ .$$

Bezugszahlen

1   Koordinatenmessgerät
2   Messtisch
3   Portal
4   Traverse
5   Schlitten
6   Pinole
7   Tastkopf
8   Taststift

9   Werkstück
10  Bohrung
11  Bohrung
12  Temperatursensor
13  Steuereinheit (Computer)
14  Recheneinheit
S   Messmerkmal
T   Werkstücktemperatur

**Patentansprüche**

1.  Verfahren zur Korrektur der thermischen Ausdehnung eines Werkstückes (9), bei dem mit einem Messgerät (1) zur dimensionellen Messung von Werkstücken Merkmale (10, 11) eines ersten Werkstückes (9) gemessen und Messwerte erfasst werden, mit folgenden Verfahrensschritten:

    - Das Werkstück (9) wird mit dem Koordinatenmessgerät (1) so lange zyklisch gemessen, wobei die Messwerte und eine bei der jeweiligen Messung vorhandene Werkstücktemperatur aufgezeichnet werden, bis die werkstücktemperatur (T) eine vorbestimmte Spanne durchlaufen hat,
    - die Messung zur Bestimmung eines merkmalsbezogenen Ausdehnungskoeffizienten wird mit einem temperaturkompensierten Messgerät (1) durchgeführt,
    - die gemessenen Werte von von der Werkstücktemperatur (T) abhängigen Merkmalen (5) werden gegen die zugehörige Werkstück-temperatur (T) aufgetragen,
    - der merkmalsbezogene Ausdehnungskoeffizient ($\alpha$) wird aus der funktionalen Abhängigkeit der Merkmalsänderung ($\Delta 5$) von der Werkstücktemperatur bestimmt,
    - der ermittelte merkmalsbezogene Ausdehnungskoeffizient ($\alpha$) wird zur Korrektur des jeweiligen Merkmales (5) bei zukünftigen Messungen eines gleichartigen Werkstückes (9) herangezogen.

2.  Verfahren nach Anspruch 1, **dadurch gekennzeichnet, dass** eine Temperaturkompensation von Maßstäben des Messgerätes (1) mittels die Temperatur der Maßstäbe erfassende Temperatursensoren bei bekannten Ausdehnungskoeffizienten der Maßstäbe durchgeführt wird.

3.  Verfahren nach Anspruch 1, **dadurch gekennzeichnet, dass** Maßstäbe des Messgerätes (1) aus einem temperaturunabhängigen Material gebildet sind.

4.  Verfahren nach einem der vorhergehenden Ansprüche, **dadurch gekennzeichnet, dass** die gleichartigen Werkstücke (9) in der gleichen Aufspannung wie das erste Werkstück (9) auf dem Messgerät (1) angeordnet werden.

5. Verfahren nach einem der vorhergehenden Ansprüche, **dadurch gekennzeichnet, dass** bei der Messung eines ersten Werkstückes (9) ein Tastersatz (8) verwendet wird, und dass bei der Messung der Merkmale der gleichartigen Werkstücke (9) derselbe Tastersatz (8) verwendet wird wie bei der Messung des ersten Werkstükkes (9).

6. Verfahren nach einem der vorhergehenden Ansprüche, **dadurch gekennzeichnet, dass** bei der Messung derselbe Messlauf verwendet wird, wie er zur Serienmessung der nachfolgenden gleichartigen Werkstücke (9) vorgesehen ist.

7. Koordinatenmessgerät

   - mit einem Tastkopf (7) zum Antasten von Werkstücken (9), der räumlich beweglich an einem motorisierten Trägergestell (4, 5) angeordnet ist, wobei der Tastkopf (7) mindestens ein Antastelement (8) aufweist,
   - mit einer den Tastkopf (7) mit Hilfe des Trägergestelles (4, 5) räumlich verfahrenden Steuereinheit (13), wobei das Antastelement (8) mit einem Werkstück (9) in Kontakt gebracht wird,
   - mit mindestens einem die Temperatur des Werkstückes (9) messenden Temperatursensor (12),
   - wobei die Steuereinheit (13) als eine wenigstens eine Speichereinheit aufweisende Steuereinheit (13) ausgebildet ist, wobei die Speichereinheit als eine die merkmalsbezogenen Antastkoordinaten und zeitlich zugehörigen Werkstücktemperaturen (T) speichernde Speichereinheit ausgebildet ist,
   - wobei die Steuereinheit (13) als eine wenigstens eine Recheneinheit (14) aufweisende Steuereinheit (13) ausgebildet ist, wobei die Recheneinheit (14) als eine die aus dem wenigstens einen gemessenen Merkmal (5) und den zugehörigen, mit dem wenigstens einen Temperatursensor (12) gemessenen Werkstücktemperaturen (T) merkmalsabhängige Ausdehnungskoeffizienten ($\alpha$) des Werkstückes berechnende Recheneinheit (14) ausgebildet ist,
   - wobei die Steuereinheit (13) als eine bei nachfolgender Messung gleichartiger Werkstücke (9) die merkmalsabhängigen Ausdehnungskoeffizienten ($\alpha$) des Werkstückes (9) heranziehende Steuereinheit (13) ausgebildet ist, und dass
   - das Koordinatenmessgerät (1) temperaturkompensierte Maßstäbe aufweist.

8. Koordinatenmessgerät nach Anspruch 7, **dadurch gekennzeichnet, dass** die Temperatur der Maßstäbe erfassende Temperatursensoren vorgesehen sind, und dass Maßstäbe mit bekannten Ausdehnungskoeffizienten vorgesehen sind.

9. Koordinatenmessgerät nach Anspruch 7, **dadurch gekennzeichnet, dass** Maßstäbe aus einem temperaturunabhängigen Material vorgesehen sind.

10. Koordinatenmessgerät nach Anspruch 9, **dadurch gekennzeichnet, dass** Maßstäbe aus Glaskeramik vorgesehen sind.

## Claims

1. A method for compensating the thermal expansion of a workpiece (9), in which with a measuring instrument (1) for the dimensional measurement of workpieces features (10, 11) of a first workpiece (9) are measured and measured values are recorded, comprising the following method steps:

   - the workpiece (9) is measured cyclically with the coordinate measuring instrument (1), the measured values and a workpiece temperature prevailing during the particular measurement being recorded, until the workpiece temperature (T) has run through a predetermined period,
   - the measurement for determining a feature-related expansion coefficient is carried out with a thermally compensated measuring instrument (1),
   - the measured values of features (5) dependent on the workpiece temperature (T) are plotted against the associated workpiece temperature (T),
   - the feature-related expansion coefficient ($\alpha$) is determined from the functional dependence of the feature change ($\Delta 5$) on the workpiece temperature,
   - the ascertained feature-related expansion coefficient ($\alpha$) is used to compensate the particular feature (5) in future measurements of a similar workpiece (9).

2. A method according to Claim 1, **characterised in that** temperature-compensation of scales of the measuring instrument (1) is carried out by means of temperature sensors detecting the temperature of the scales where the expansion coefficients of the scales are known.

3. A method according to Claim 1, **characterised in that** scales of the measuring instrument (1) are formed from a temperature-independent material.

**4.** A method according to one of the preceding claims, **characterised in that** the similar workpieces (9) are arranged on the measuring instrument (1) in the same setup as the first workpiece (9).

**5.** A method according to one of the preceding claims, **characterised in that** a feeler system (8) is used when measuring a first workpiece (9), and **in that** the same feeler system (8) is used when measuring the features of the similar workpieces (9) as is used when measuring the first workpiece (9).

**6.** A method according to one of the preceding claims, **characterised in that** the measuring operation used when measuring is the same as that provided for the serial measurement of the subsequent, similar workpieces (9).

**7.** A coordinate measuring instrument comprising

> - a probe (7) for sampling workpieces (9), which is arranged so as to be movable in space on a motorised support frame (4, 5), the probe (7) having at least one sampling element (8),
> - a control unit (13) moving the probe (7) in space with the aid of the support frame (4, 5), the sampling element (8) being brought into contact with a workpiece (9),
> - at least one temperature sensor (12) measuring the temperature of the workpiece (9),
> - wherein the control unit (13) is a control unit (13) having at least one storage unit, wherein the storage unit is a storage unit storing the feature-related sampling coordinates and associated workpiece temperatures (T) over time,
> - wherein the control unit (13) is a control unit (13) having at least one computing unit (14), wherein the computing unit (14) is a computing unit (14) calculating the feature-dependent expansion coefficients ($\alpha$) of the workpiece from the at least one measured feature (5) and the associated workpiece temperatures (T) measured with the at least one temperature sensor (12),
> - wherein the control unit (13) is a control unit (13) using the feature-dependent expansion coefficients ($\alpha$) of the workpiece (9) in the subsequent measurement of similar workpieces (9), and in that
> - the coordinate measuring instrument (1) has thermally compensated scales.

**8.** A coordinate measuring instrument according to Claim 7, **characterised in that** temperature sensors detecting the temperature of the scales are provided, and **in that** scales having known expansion coefficients are provided.

**9.** A coordinate measuring instrument according to Claim 7, **characterised in that** scales composed of a temperature-independent material are provided.

**10.** A coordinate measuring instrument according to Claim 9, **characterised in that** scales composed of glass ceramics are provided.

## Revendications

**1.** Procédé de correction de la dilatation thermique d'une pièce à usiner (9), dans le cadre duquel des caractéristiques de pièce (10, 11) d'une première pièce à usiner (9) sont mesurées au moyen d'un appareil de mesure (1) destiné à mesurer des dimensions de pièces à usiner et des valeurs de mesure sont détectées, comprenant les étapes suivantes :

> - la pièce à usiner (9) est mesurée par l'appareil de mesure par coordonnées (1) de manière cyclique, les valeurs de mesure et une température de la pièce à usiner présente lors de la mesure respective étant enregistrées, jusqu'à ce que la température de la pièce à usiner (T) ait parcouru une plage prédéterminée,
> - la mesure destinée à déterminer un coefficient de dilatation en fonction des caractéristiques est réalisée au moyen d'un appareil de mesure compensée en température (1),
> - les valeurs mesurées des caractéristiques (S) dépendant de la température de la pièce à usiner (T) sont représentées graphiquement par rapport à la température (T) associée de la pièce à usiner,
> - le coefficient de dilatation en fonction des caractéristiques ($\alpha$) est déterminé à partir de la dépendance fonctionnelle du changement de caractéristique ($\Delta S$) avec la température de la pièce à usiner,
> - le coefficient de dilatation en fonction des caractéristiques obtenu ($\alpha$) est utilisé pour corriger la caractéristique respective (S) lors de mesures futures d'une pièce à usiner similaire.

**2.** Procédé selon la revendication 1, **caractérisé en ce qu'**une compensation en température d'échelles de l'appareil de mesure (1) est réalisée au moyen de capteurs de température détectant la température des échelles, dans le cas de coefficients de dilatation connus des échelles.

**3.** Procédé selon la revendication 1, **caractérisé en ce que** les échelles de l'appareil de mesure (1) sont formées à partir d'un matériau indépendant de la température.

**4.** Procédé selon l'une quelconque des revendications précédentes, **caractérisé en ce que** les pièces à usiner similaires (9) sont disposées selon le même serrage que la première pièce à usiner (9) sur l'appareil de mesure.

5. Procédé selon l'une quelconque des revendications précédentes, **caractérisé en ce que**, lors de la mesure d'une première pièce à usiner (9), un ensemble palpeur (8) est utilisé, et **en ce que**, lors de la mesure des caractéristiques des pièces à usiner similaires (9), il est utilisé le même ensemble palpeur (8) que pour la mesure de la première pièce à usiner (9).

6. Procédé selon l'une quelconque des revendications précédentes, **caractérisé en ce que**, lors de la mesure, il est utilisé le même cycle de mesure que celui prévu pour la mesure en série des pièces à usiner similaires (9) suivantes.

7. Appareil de mesure de coordonnées comprenant

   - un palpeur (7) pour palper des pièces à usiner (9), qui est disposé de manière mobile dans l'espace sur une structure de support motorisée (4, 5), le palpeur (7) présentant au moins un élément de palpage (8),
   - une unité de commande (13) déplaçant dans l'espace le palpeur (7) à l'aide de la structure de support (4, 5), l'élément de palpage (8) étant amené en contact avec une pièce à usiner (9),
   - au moins un capteur de température (12) mesurant la température de la pièce à usiner (9),
   - l'unité de commande (13) étant conçue sous la formé d'une unité de commande (13) présentant au moins une unité d'enregistrement, l'unité d'enregistrement étant conçue sous la forme d'une unité d'enregistrement enregistrant les coordonnées de palpage en fonction des caractéristiques et les températures de la pièce à usiner (T) temporellement associées,
   - l'unité de commande (13) est conçue sous la forme d'une unité de commande (13) présentant au moins une unité de calcul (14), l'unité de calcul (14) étant conçue sous la forme d'une unité de calcul (14) calculant les coefficients de dilatation (a) de la pièce à usiner en fonction des caractéristiques, à partir d'au moins une caractéristique mesurée (S) et des températures associées de la pièce à usiner (T) mesurées au moyen d'au moins un capteur de température (12),
   - l'unité de commande (13) étant conçue sous la forme d'une unité de commande (13) utilisant les coefficients de dilatation (a) en fonction des caractéristiques de la pièce à usiner (9), lors de la mesure ultérieure de pièces à usiner similaires (9), et
   - l'appareil de mesure par coordonnées (1) présente des échelles compensées en température.

8. Appareil de mesure par coordonnées selon la revendication 7, **caractérisé en ce que** sont prévus des capteurs de température détectant la température des échelles, et sont prévues des échelles avec les coefficients de dilatation connus.

9. Appareil de mesure par coordonnées selon la revendication 7, **caractérisé en ce que** sont prévues des échelles constituées de matériau insensible à la température.

10. Appareil de mesure par coordonnées selon la revendication 9, **caractérisé en ce que** sont prévues des échelles constituées de vitrocéramique.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0660073 A1
- WO 0034974 A1
- DE 10138138 A1
- EP 0416391 A2
- EP 1128156 A1